**Europäisches Patentamt**

**European Patent Office**

**Office européen des brevets**

(11) Publication number : **0 475 677 A1**

## (12) EUROPEAN PATENT APPLICATION

(21) Application number : **91308121.2**

(22) Date of filing : **05.09.91**

(51) Int. Cl.⁵ : **B64C 1/40, F16L 59/14**

(30) Priority : **08.09.90 GB 9019714**

(43) Date of publication of application :
**18.03.92 Bulletin 92/12**

(84) Designated Contracting States :
**DE ES FR GB IT NL SE**

(71) Applicant : **BRITISH AEROSPACE PUBLIC LIMITED COMPANY**
**11 Strand**
**London WC2N 5JT (GB)**

(72) Inventor : **Barton, Colin, British Aerospace(Comm. Aircraft)**
**Airframe Syst., Woodford Aerodrome, Chester Road**
**Stockport, Cheshire SK7 1QR (GB)**

(54) **Fire retarding means for aircraft.**

(57)  An aircraft fuselage (1) and fire retarding means (14,15) therefor are provided. The retarding means includes a fire retarding fluid absorbant fibrous blanket (14) having dispersed therethrough distribution means in the form of pipes (15) for the supply of pressurised coolant for absorption by the blanket (14).

EP 0 475 677 A1

FIG.4

This invention relates to fire retarding means for aircraft. More particularly, it relates to fire retarding shields for aircraft fuselages in order to extend the survival time for passengers and crew in a post-crash fire.

In a typical post-crash fire, fuel released from an aircraft storage/distribution system may collect adjacent to the exterior surface of the aircraft. As a consequence, there is risk of ignition from hot engine parts, sparks etc., which could rapidly develop into a major fire impingement onto the exterior surface of the fuselage structure.

Depending upon particular crash conditions, ie: aircraft attitudes on the ground, wind strength and direction etc., burn-through of the fuselage skin will follow rapidly following the establishment of a fully developed fire. The fuselage will normally comprise the metal outer skin, a layer of heat and sound insulating material and an inner layer of cabin trim material. The transfer of heat through the fuselage skins to the cabin will result in the spontaneous ignition of cabin furnishing materials, with a consequential build-up of smoke and toxic fumes within the cabin.

The successful evacuation of passengers and crew is dependent upon the retention of a suitable environment within the occupied areas for a period of time sufficient to enable an emergency evacuation to be fully completed.

It is the object of the present invention to achieve this by the provision of means for extending the burn-through time of the outer skin and suppressing the heat transfer into the cabin.

According to one aspect of the present invention there is provided fire retarding means for aircraft fuselages, said retarding means including a fire retarding fluid absorbent fibrous blanket having dispersed therethrough distribution means for the supply of pressurised coolant for absorption by said blanket.

Thus in the event of a fire adjacently external to the fuselage, saturation of the fibrous blanket with coolant from source reduces the rate of heat transfer into the fuselage, maximises outer skin burn-through times and absorbs heat energy thereby minimising smoke and toxic fumes generation.

Preferably said fire retarding means provides in combination a composite blanket assembly having a first layer being a fire retarding fluid absorbent fibrous blanket having dispersed therethrough distribution means for the supply of pressurised coolant for absorption by the blanket and a second layer forming a sound and thermal insulation blanket.

Alternatively, the blanket may comprise composite material in a single layer which acts both as a fire retarding fluid absorbant fibrous blanket and a sound and thermal insulation blanket.

The blanket is preferably of a fabric comprised of loosely packed fibres such that fluid travel by "wicking" through the material is encouraged.

The fire retarding means may be enclosed within a single plastics sac.

The distribution means for the supply of pressurised coolant may comprise at least one pipe extending through the fibrous blanket.

The pipe or pipes may have punctured walls to allow egress of cooling fluid through walls of the piping. Alternatively, many different pipes may be disposed throughout the blanket having ends in a variety of positions to ensure even fluid distribution.

The piping is preferably of lightweight material, advantageously plastics material.

The piping may be apertured during production thereof or may be punctured during "needling" of the blanket material with the piping in position therein.

The fire retarding means may include fluid supply means for supplying cooling fluid to the fibrous blanket. The fluid supply means may comprise one or more fluid reservoirs for location in an aircraft fuselage and fluid conduit to conduct the cooling fluid from the or each reservoir to the fibrous blanket.

The fire retarding means may include pressurising means for the or each reservoir to force the fluid under pressure from the reservoir to the fibrous blanket. A pressure of 3 to 4 p.s.i. may be used to pressurise the or each reservoir.

The fire retarding means may include sensing means for positioning on a aircraft fuselage to sense fire in a region of the fuselage and cause flow of cooling fluid to the fibrous blanket in the said region.

The fire retarding means may include at least one arming device for operation, for example, from a cockpit of an aircraft so that the fire retarding means may be armed for operation, for example pursuant to signals from the sensing means, following a crash or other incident.

According to a second aspect of the present invention there is provided an aircraft fuselage fitted with fire retarding means according to the first aspect of the invention.

The fuselage may include fibrous blanket disposed adjacent an outer fuselage skin and may also include the fibrous blanket disposed adjacent a floor of the fuselage, preferably being positioned underneath the said floor.

The sensing means may be attached to the fuselage outer skin or to the floor of the fuselage. Positioning on either side of the outer skin and/or floor is envisaged.

The reservoirs may be positioned at either end of the fuselage so that fluid flow to the fibrous blanket may be ensured even if the fuselage is severed part way therealong.

One embodiment of the present invention will now be described, by way of example only, and with reference to the following drawings in which :-

Figure 1 illustrates a side elevation on an aircraft fuselage according to the invention.

Figure 2 pictorially illustrates a portion of fuselage structure partly according to the prior art and partly according to the invention, viewed internally.

Figure 3 is a typical section through the fuselage structure taken along a line '3 - 3' in Figure 2 according to the prior art.

Figure 4 illustrates a section through the fuselage structure incorporating the present invention taken along a line '4 - 4' in Figure 2.

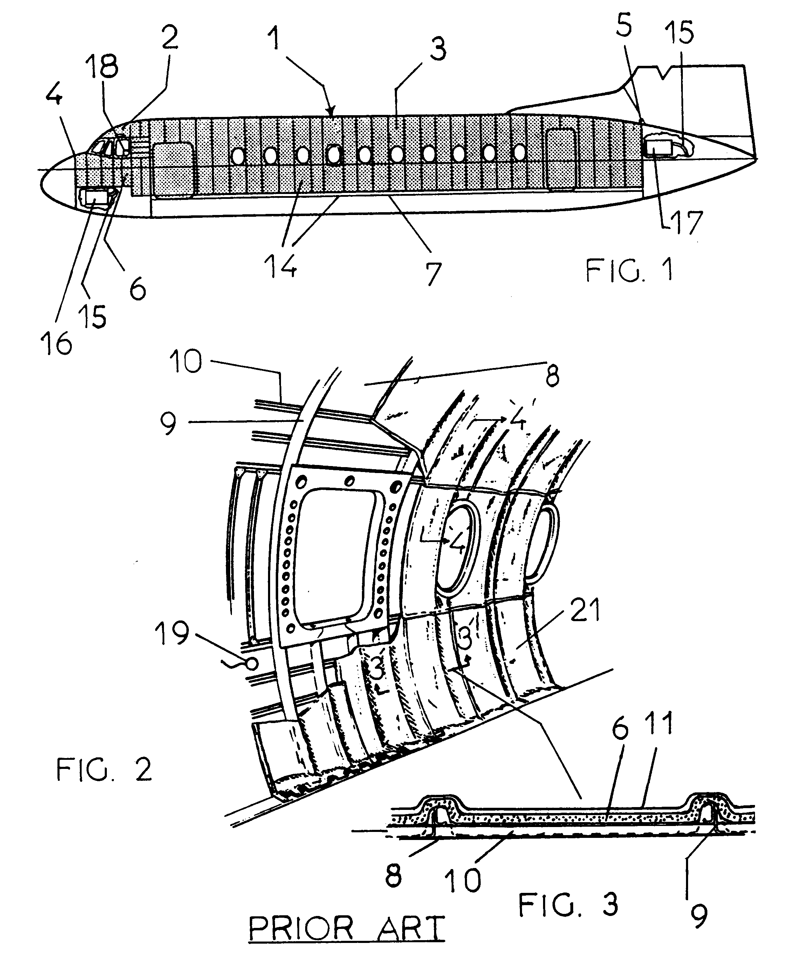

Referring to the drawings, Figure 1 illustrates diagrammatically, in side elevation, a passenger carrying aircraft fuselage 1 including a crew compartment 2 and a passenger cabin 3 extending between a front pressure bulkhead 4 and a rear pressure bulkhead 5. That portion shown shaded represents sound and thermal insulation 6 and fibrous blanket in the form of shield material 14 which extends between the pressure bulkheads and encases the internal structure above and across the floor line 7.

The fuselage 1 has a pressurised reservoir 16, 17 at each end thereof having piping 15 running from each reservoir to the shield material 14.

The crew compartment 2 includes an aiming device 18 for the fire retarding means.

As illustrated in Figures 2 and 3 an aircraft fuselage 1 comprises sheets of aluminium alloy skin 8 principally supported by axial frames or formers 9 and longitudinal stringers 10. Other structural components may be employed, some of which are illustrated here but not further described or identified. Acoustic and thermal insulation blankets 6 are positioned on the inside of the fuselage skin and support structure and covered by sheets of rigid material 11 to form a decorative trim to complete the side wall installation.

In external fire conditions, heat deterioration of these materials contributes to a build up of smoke and toxic fumes within the cabin and which will ultimately catch fire by spontaneous combustion. A change in the outer skin material from aluminium alloy to stainless steel or titanium would extend the burn-through time but would not prevent thermal transfer to the insulation materials for any significant period.

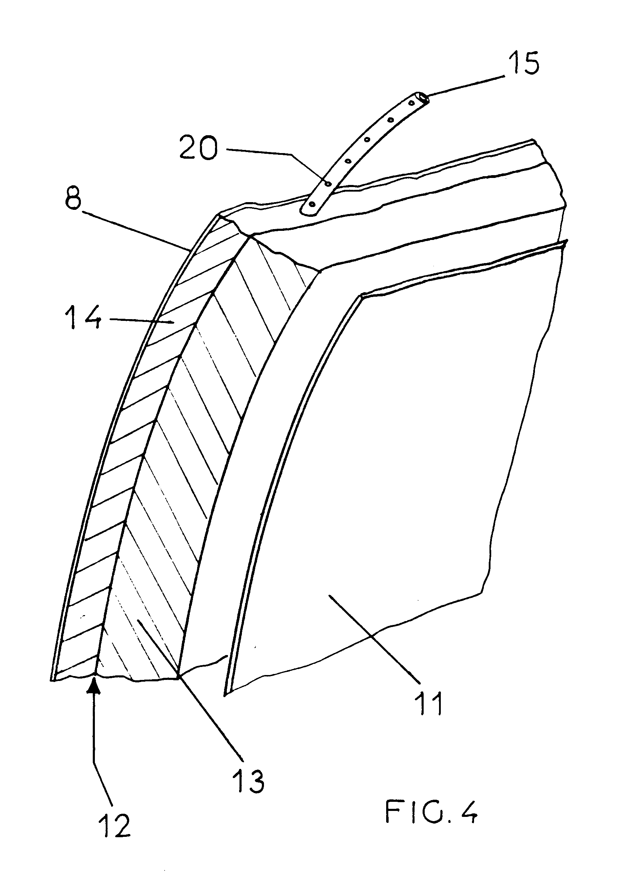

Figure 4 shows a composite acoustic/thermal insulation blanket 12 including the outer protective shield material 14 comprising material which readily permits the free transportation of fluid along its fibres, ie. the property of wicking, and an inner insulation material 13. When installed the protective shield material is in close contact with the inside of the fuselage skin and the supporting structure. The decorative trim 11 covers the insulation layer 13 as previously described.

Incorporated within the protective shield material 14 are the distribution pipes 15 which connect to the storage reservoirs 16, 17 containing water based cooling fluid, pressurised gas storage means being connected to the fluid supply.

The system is armed from the flight deck 2 and is activated manually by the crew or automatically by a crash switch/temperature sensing control means 19. Upon demand, shut-off valves open to make the fluid supply available to the distribution system. Discharged pressurised inert gas drives the water along main distribution lines to distribution pipe networks, saturating the protective shield material 14.

The cooling effect of the saturated shield reduces the rate of heat transfer from the hot skin to the decorative trim material and other furnishings whilst simultaneously extending the burn-through time of the outer skin by absorbing heat energy and using it to convert water into steam.

## Claims

1. Fire retarding means for aircraft fuselages, said retarding means characterised by including a fire retarding fluid absorbent fibrous blanket (14) having dispersed therethrough distribution means (15, 20) for the supply of pressurised coolant for absorption by said blanket (14)

2. Fire retarding means as in Claim 1 in which said retarding means includes a composite blanket (12) assembly having a first layer being a said fire retarding fluid absorbent fibrous blanket (14) and a second layer forming a sound and thermal insulation blanket (13).

3. Fire retarding means as in Claim 1 or 2 in which said fibrous blanket (14) is of fabric comprised of loosely packed fibres.

4. Fire retarding means as in any preceding Claim in which said distribution means comprise at least one pipe (15) extending through the fibrous blanket (14).

5. Fire retarding means as in Claim 4 in which said at least one pipe has a punctured wall (20) to allow egress of cooling fluid through the wall.

6. Fire retarding means as in any preceding Claim including fluid supply means comprising at least one reservoir (16,17) for location in an aircraft fuselage and fluid conduit (15) to conduct said cooling fluid from the or each reservoir (16,17) to said fibrous blanket (14).

7. Fire retarding means as in any preceding Claim including sensing means (19) for positioning on an aircraft fuselage to sense fire in a region of the fuselage and cause flow of cooling fluid to said fibrous blanket (14) in said region.

8. Fire retarding means as in any preceding Claim including at least one arming device (18).

9. An aircraft fuselage (1) characterised by comprising fire retarding means (12) according to any preceding Claim.

10. An aircraft fuselage (1) as in Claim 9 in which said fibrous blanket (14) is disposed adjacent an outer fuselage skin (8) thereof.

11. An aircraft fuselage (1) as in Claim 9 or 10 in which said fibrous blanket (14) is disposed adjacent a floor (7) thereof.

12. An aircraft fuselage (1) as in Claim 9, 10 or 11 including a reservoir (16, 17) for cooling fluid positioned at either end thereof.

FIG. 1

FIG. 2

FIG. 3

PRIOR ART

FIG. 4

**European Patent Office**

# EUROPEAN SEARCH REPORT

Application Number

EP 91 30 8121

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 073 688 (SOCIETE NATIONALE INDUSTRIELLE AEROSPATIALE) | 1,3,4,6, 9,10,12 | B64C1/40 F16L59/14 |
| Y | * page 1, line 1 - line 22 * | 2,5,7 | |
| A | * page 4, line 3 - line 24 * | 8,11 | |
| | * page 5, line 13 - page 7, line 5 * | | |
| | * page 7, line 27 - page 8, line 4; figure 1 * | | |
| | --- | | |
| Y | US-A-3 785 591 (STALMACH, JR.) | 5,7 | |
| A | * column 2, line 23 - line 28 * | 1,3-4, 9-10,12 | |
| | * column 3, line 8 - line 10 * | | |
| | * column 5, line 18 - line 42 * | | |
| | * column 7, line 10 - line 40 * | | |
| | * column 9, line 35 - column 11, line 9; figures 7-8 * | | |
| | --- | | |
| Y | US-A-4 849 276 (BENDING ET AL.) | 2 | |
| A | * column 1, line 14 - line 20 * | 1,3,9-11 | |
| | * column 2, line 40 - column 3, line 27; figures 1-2 * | | |
| | --- | | **TECHNICAL FIELDS SEARCHED (Int. Cl.5)** |
| P,A | US-A-4 991 797 (MILLER ET AL.) | 1,4,6,7, 9-12 | |
| | * column 2, line 27 - column 3, line 8 * | | B64C |
| | * column 6, line 10 - line 35; claim 1; figure 1 * | | F16L |
| | --- | | B64G |
| | | | A62C |
| A | US-A-3 364 991 (WANG, D.) | 1,3,4,9 | |
| | * column 1, line 60 - column 2, line 21 * | | |
| | * column 4, line 41 - line 65; figures 3-4 * | | |
| | ----- | | |

The present search report has been drawn up for all claims

| Place of search | Date of completion of the search | Examiner |
|---|---|---|
| THE HAGUE | 29 NOVEMBER 1991 | RIVERO C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)